# EUROPEAN PATENT SPECIFICATION

(11) **EP 2 242 667 B1**
(45) Date of publication and mention of the grant of the patent: **06.06.2012**
(21) Application number: 09713320.1
(22) Date of filing: 04.02.2009
(51) Int. Cl.: B60N 2/58, A47C 31/02

(54) **HOOK FOR ATTACHING A SHEET MATERIAL TO A MOULD-FORMED BODY**
HAKEN ZUR ANBRINGUNG EINES BAHNENMATERIALS AN EINEM IN EINER FORM GEFORMTEN ELEMENT
CROCHET POUR FIXER UN MATERIAU EN FEUILLE A UN CORPS MOULE

(30) Priority: 19.02.2008 IT MI20080262
(43) Date of publication of application: 27.10.2010
(73) Proprietor: Toscana Gomma S.P.A., 27038 Robbio (IT)
(72) Inventor: GILARDI, Piero, Enrico, I-27038 Robbio (Pavia) (IT)
(74) Representative: Petruzziello, Aldo
(86) International application number: PCT/EP2009/000733
(87) International publication number: WO 2009/103417

(56) References cited:
- EP-A- 1 803 376
- WO-A-03/070509
- US-A- 4 931 344

## Description

The present invention refers to a hook for attaching a sheet material to a mould-formed body.

In the automobile sector, the seats and/or the seatbacks of the vehicles generally comprise a supporting body of foam material, such as polyurethane foam, which is covered with upholstery of sheet material, such as cloth, imitation leather or other covering materials.

The sheet covering material is held on the foam body by means of an anchoring system, which comprises a plurality of hooks made integral with the foam body. Said hooks have a seat adapted to receive, in a snap coupling relationship, a fastening element made integral with the sheet covering material.

Patent application PCT/EP2007/008376 in the name of the same applicant, the content of which is incorporated herein by reference, discloses two different embodiments of the attachment element connected to the sheet covering material. In the first embodiment the attachment element consists of a metal rod and in the second embodiment the attachment element consists off a rib with a triangular cross-section.

Consequently, in the prior art, two different types of hooks are provided. A first type of hook has two protrusions shaped differently so as to define a seat adapted to receive an attachment element in the form of a metal rod. A second type of hook has two protrusions shaped in the same way so as to define a seat adapted to receive an attachment element in the form of a rib with a triangular section.

WO 03/070509 A shows a hook with a base plate and two protrusions adapted to anchor an attachment element.

This leads to an excessively costly anchoring system, since two different types of hooks must be cast and stocked.

Object of the present invention is to overcome the drawbacks of the prior art by providing a hook for attaching a sheet material to a mould-formed body that is practical, versatile, cheap and simple to perform.

This object is achieved in accordance with the invention with a hook whose characteristics are listed in appended independent claim 1.

Advantageous embodiments of the invention are apparent from the dependent claims.

According to the invention, the hook for attaching a sheet material to a mould-formed body comprises:
- two base plates,
- a first protrusion and a second protrusion protruding projectingly from said base plates so that the end tips of said protrusions are situated at a certain distance from each other, to engender an entry aperture which leads to an anchoring seat adapted to anchor an attachment element, and
- a bridge connected to the base of said protrusions so as to form a seat between the edges of said base plates, said seat being engageable by a tubular element so as to cause said protrusions to draw together to close said entry aperture between the tips of said protrusions.

The particular shape of the hook according to the invention makes it able to anchor any type of attachment element attached to a sheet material for covering the mould-formed body.

The advantages of the hook according to the invention are obvious in that it allows considerable savings in the casting of said hook and also in the warehouse stock management.

Further characteristics of the invention will be made clearer by the detailed description that follows, referring to purely exemplifying and therefore non-limiting embodiments thereof, illustrated in the appended drawings, wherein:
- Figure 1 is a perspective view illustrating an anchoring system comprising a hook according to the invention and, exploded, a metal rod and a supporting strip partially broken off;
- Figure 2 is a side view of the hook of Figure 1;
- Figure 3 is a side view of the anchoring system of Figure 1 assembled;
- Figure 4 is a partially sectional broken off view showing the supporting body into which the anchoring system according to the invention is integrated and, exploded, a sheet material provided with an attachment element for coupling to the anchoring system;
- Figure 5 is a view like Figure 4, but illustrating the attachment element of the sheet material coupled to the anchoring system according to the invention;
- Figure 6 is a sectional view illustrating a first variant of the attachment element anchored to the hook according to the invention; and
- Figure 7 is a second variant of the attachment element anchored to the hook according to the invention.

The hook according to the invention, designated by the reference numeral 2, is described with the aid of figures.

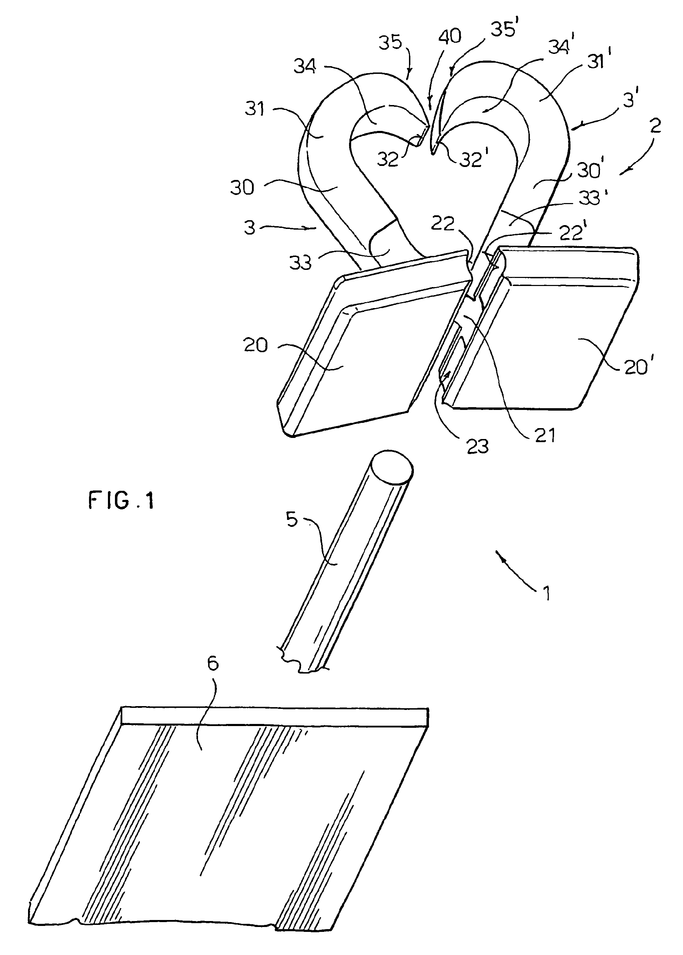

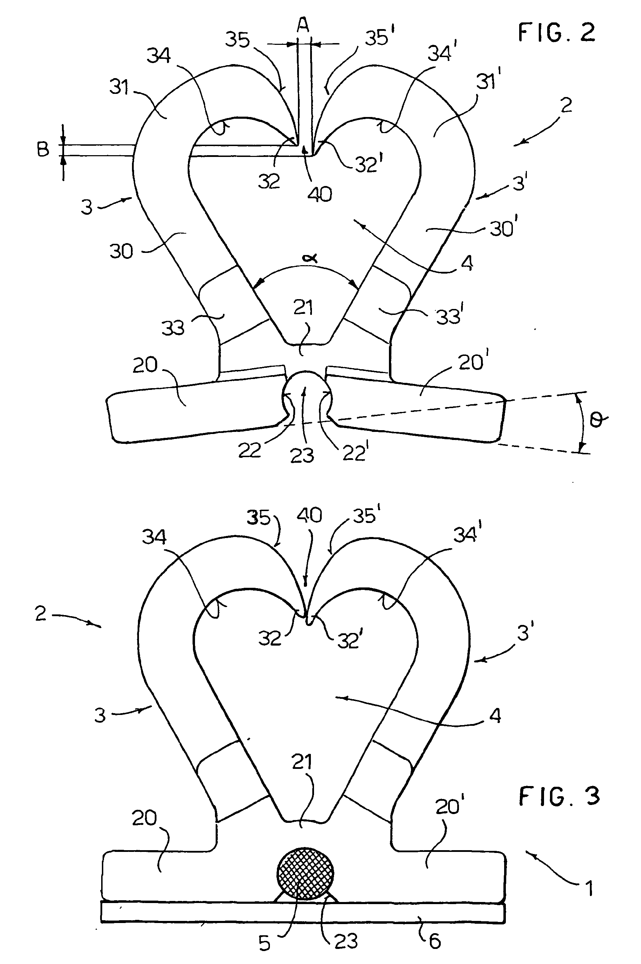

With particular reference to Figures 1 and 2, the hook 2 comprises two base plates 20, 20' from which protrude projectingly a first protrusion 3 and a second protrusion 3'. The bases of the two protrusions 3, 3' are connected to each other by means of a bridge 21. The protrusions 3, 3' are opposed so as to define between them an anchoring seat 4 adapted to receive an attachment element connected to a sheet material as will be described hereunder.

The connecting bridge 21 is designed so as to keep the edges 22, 22' of the two base plates at a short distance from each other so as to engender a gap or seat 23 adapted to accommodate a rod 5. For this purpose the edges 22, 22' of the two base plates are arched with a radius of curvature substantially equal to the radius of curvature of the rod 5. The lower surface of the connecting bridge 21 also is arched with the same radius of curvature as the rod 5.

Under normal conditions, the two base plates 20, 20' are disposed along two planes inclined with respect to each other by an angle θ other than zero (Figure 2). The angle θ can preferably range from 5° to 25°. In this case the profile of the seat 23 is substantially elliptical and in any case the seat 23 is slightly narrower than the diameter of the rod 5.

Each protrusion 3, 3' is substantially hook-shaped or J-shaped and has a straight portion 30, 30' that continues with a curved portion 31, 31' ending in a tip 32, 32'. The tips 32, 32' of the two protrusions 3, 3' are opposed and slightly spaced apart so as to engender a gap or entry aperture 40 that leads to the seat 4.

With reference to Figure 2, after the casting of the hook 2 the tips 32, 32' are situated at a distance A that can range from 0.5 to 2 mm. Furthermore, the tips 32, 32' are not at the same level, in that they are offset by distance B of about 0.5 to 2 mm. To be precise, the tip 32' of the second protrusion 3' is situated nearer the connecting bridge 21 than the tip 32 of the first protrusion 3.

In the straight portion 30, 30' there are weakenings 33, 33' obtained through a reduction in thickness. Each curved portion 31, 31' defines an inner loop 34, 34' and an outer cam surface 35, 35' that acts as a guide towards the entry aperture 40.

The straight portions 30, 30' are disposed inclined with respect to each other so as to give rise to an angle α other than zero (Figure 2). The angle α is preferably between 30° and 60°. Thus, the profile of the anchoring seat 4 is substantially heart-shaped.

According to the invention, a plurality of hooks 2 can be used to form an anchoring system designated as a whole with the reference numeral 1. The assembly of the anchoring system 1 is described with reference to Figures 1 and 3. The rod 5 is forcibly inserted into the seat 23 between the bases 20, 20' of the hook 2. As a result, as shown in Figure 3, the two bases 20, 20' of the hook 2 rotate slightly around the rod 5 and are disposed on a horizontal plane.

The rotation of the two bases 20, 20' also causes a rotation of the two protrusions 3, 3' that draw nearer to each other, elastically compressing the bridge 21. As a result, the two tips 32, 32' of the protrusions 3, 3' come into contact with each other, reducing the width A of the entry aperture 40 to zero. In any case the outer cam surfaces 35, 35' of the protrusions continue to engender an entry guide towards the contact surface between the two tips 32, 32'. Furthermore, the two tips 32, 32' are still at a different level.

In order to keep the hook 2 in this ready-for-use state, the base plates 20, 20' of the hook are fixed by a supporting strip 6 by means of suitable fixing means such as heat bonding, ultrasound bonding, gluing, riveting, stapling and the like. Various portions of supporting strips 6 can be joined together so as to form a polygonal zigzag line having a non-rectilinear profile, according to requirements.

It must be considered that the anchoring system 1 is destined to be placed in a mould to be sunk in a foam material. As is known from the application PCT/EP2007/008376, incorporated herein by reference, magnets able to attract respective metal parts provided in the anchoring system 1 are provided in the mould, so that the anchoring system 1 positions itself correctly in the mould.

For this purpose, the rod 5 can advantageously be a metal rod. However, if the metal material is to be limited so as to avoid disposal problems, the rod 5 can also be made of hard plastic. In this case, metal materials such as microspheres, rivets, clips and the like can be inserted in the strip 6 and/or in the bases 20, 20' of the hook 2, as described in PCT/EP2007/008376.

The anchoring system 1 is disposed in a mould for the foaming. As a result the metal parts of the anchoring system 1 couple magnetically with the magnets of the mould and the anchoring system 1 positions itself correctly inside the mould.

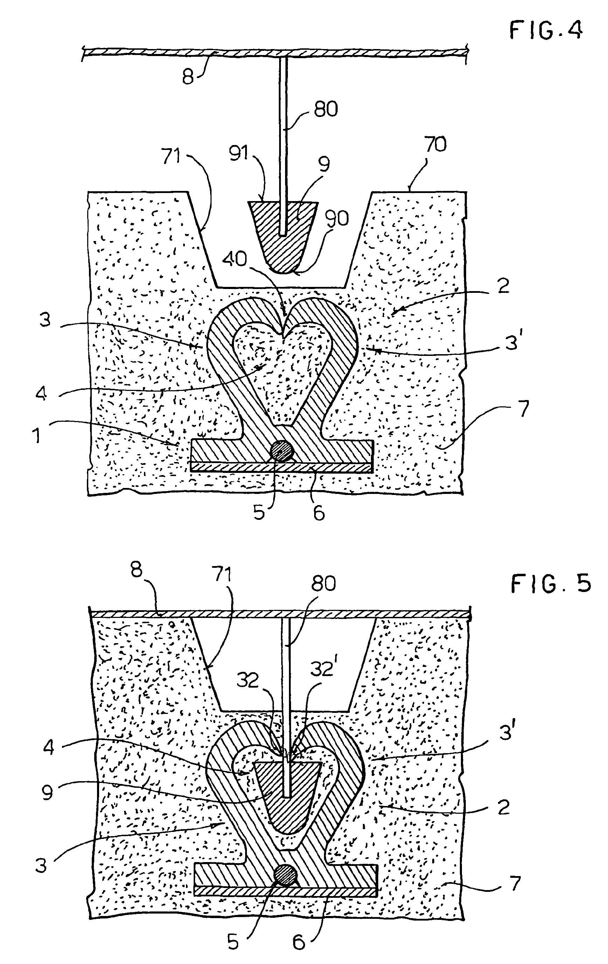

At this point, a foamable material, such as polyurethane for example, is introduced into the mould and is left to reticulate so as to incorporate the anchoring system 1. In this manner, as shown in Figure 4, a body of foam material 7 which incorporates the anchoring system 1 provided with the hooks 2 according to the invention is extracted from the mould.

The body of foam material 7 is shaped as a seat or a seatback and has a surface 70 destined to be covered with a suitable sheet covering material 8. In the surface 70 of the foam material body 7, coinciding with the anchoring system 1, a groove 71 is provided which ends at the ends of the protrusions 3, 3' of the anchoring elements 2, so that the anchoring elements 2 are sunk in the foam material and also visible through the groove 71.

The anchoring element 2 must be made of hard, elastic plastic material, such as polyethylene, polypropylene, polyamide, PVC, PET and the like, which does not adhere to the material, generally polyurethane foam, of the body 7.

The sheet covering material 8 has a rib 80 integral therewith. The rib 80 ends with a suitable attachment element 9 adapted to be hooked by the hooks 2. In Figures 4 and 5 an attachment element in the form of a profile 9, substantially triangular in section, is illustrated. The tip 90 of the attachment element 9 is rounded and its rear abutment surface 91 is slightly concave.

To apply the sheet covering material 8 to the foam body 7, the attachment element 9 is inserted in the groove 71 of the foam body 7 and is forced by pressure to the entry 40 of the anchoring seat 4 of the hooks 2. It should be noted that the depth of the groove 71 outside the protrusions 3 and 3' extends to the height of the tip 90 of the attachment element 9, when the latter is inserted between the protrusions 3, 3'(Figure 5).

The cam walls 35, 35' of the protrusions 3, 3' act as a guide for the rounded tip 90 of the attachment element 9. The pressure of the attachment element 9 parts the protrusions 3 and 3', widening the aperture 40, so that the attachment element 9 enters the anchoring seat 4 and the protrusions 3 and 3' elastically snap back into their original position, preventing the attachment element 9 from coming out.

In fact, as shown in Figure 5, the tips 32, 32' of the protrusions 3, 3' of the hook abut against the rear abutment wall 91 of the attachment element. The extraction of the attachment element 9 from the hook 2 proves difficult; in fact the presence of the rod 5 in its seat 23 at the base of the hook prevents the parting of the protrusions 3, 3' and thus the opening of the gap 40.

It should be noted that in this situation the polyurethane foam that is present in the anchoring seat 4 acts as a shock absorber for the attachment element 9, stabilising it and avoiding annoying noises when the user is seated.

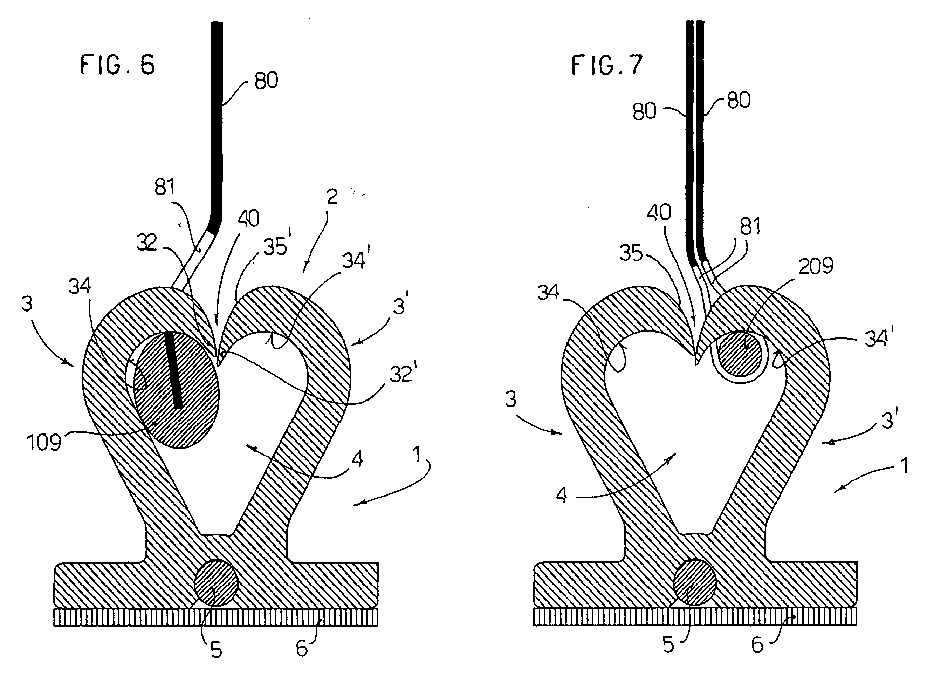

Figure 6 shows a first variant of the attachment element 109 that takes the form of a profile with an elliptical section with a slot 81 coinciding with the protrusions 3, 3'. In this case, when the attachment element 109 passes beyond the entry aperture 40 to enter the anchoring seat 4 of the hook 2, it is automatically directed towards the loop 34 of the first protrusion and retained stably by said loop 34. In fact the tip 32' of the second protrusion 3' is longer than the tip 32 of the first protrusion and thus pushes the attachment element 109 towards the loop 34 of the first protrusion.

Figure 7 shows a second variant of the attachment element 209 that takes the form of a rod. In this case, the rod 209 is retained by two cloth strips 80 connected to the sheet covering material and provided with a slot 81 to allow the passage of the loop 34' of the protrusion 3'.

With reference to Figures 6 and 7, when the attachment element 109 or the attachment element 209 is inserted beyond the tips 32 and 32' of the protrusions, according to how it is released by the pressure of the fingers that have inserted it, it can move up into the loop 34 or into the loop 34' indifferently.

The reason for the two different heights of the tips 32 and 32' lies in the fact that the two tips, for manufacturing reasons, cannot be sharpened and therefore if they were paired a flat area might occur on which the upper part of the attachment element 109, 209 could rest and this could apart the two protrusions 3 and 3' and thus allow the rod 109 or 209 to come out.

Numerous variations of modifications of detail within the reach of a person skilled in the art can be made to the present embodiments of the invention without thereby departing from the scope of the invention as set forth in the appended claims.

## Claims

1. A hook (2), particularly for attaching a sheet material to a mould-formed body, the hook (2) comprising:
- two base plates (20, 20'),
- a first protrusion (3) and a second protrusion (3') protruding projectingly from said base plates (20, 20') so that the end tips (32, 32') of said protrusions are situated at a certain distance from each other to engender an entry aperture (40) which leads to an anchoring seat (4) adapted to anchor an attachment element (9; 109; 209), and
- a bridge (21) connected to the base of said protrusions (3, 3'), so as to form a seat (23) between the edges (22, 22') of said base plates; said seat (23) being engageable by a tubular element (5) so as to cause said protrusions (3, 3') to draw together to close said entry aperture (40) between the tips (32, 32') of said protrusions.

2. A hook (2) according to claim 1, **characterised in that** the opposed edges (22, 22') of said base plates (20, 20') and the lower surface of said connecting bridge (21) have a substantially arched profile with a radius of curvature equal to that of the tubular element (5) destined to engage the seat (23).

3. A hook (2) according to claim 1 or 2, **characterised in that** said base plates (20, 20') are disposed on two planes inclined with respect to each other by an angle (θ) other than zero, preferably in the range of 5° to 25°.

4. A hook (2) according to any one of the preceding claims, **characterised in that** each protrusion (3, 3') consists of a substantially J-shaped hook which has a straight part (30, 30') and a curved part (31, 31') ending in said tip (32, 32'), said curved part (31, 31') engendering an inner loop (34, 34') acting as a retaining seat for the attachment element (109; 209) and an outer cam surface (35, 35') acting as a guide towards said aperture (40) for the attachment element (9; 109; 209).

5. A hook (2) according to claim 4, **characterised in that** said straight portions (30, 30') of the two protrusions (3, 3') are disposed inclined with respect to each other so as to give rise to an angle (α) other than zero, preferably in the range of 30° to 60°, so that said anchoring seat (4) defined between the two protrusions is substantially heart-shaped.

6. A hook (2) according to claim 4 or 5, **characterised in that** said tips (32, 32') of the protrusions are at different levels from each other, so as to direct said fastening element (109; 209) towards the loop (34) of the first protrusion (3) or towards the loop (34') of the second protrusion (3').

7. An anchoring system (1) destined to be incorporated into a mould-formed body (7) to anchor an attachment element (9; 109; 209) connected to a sheet material (8) for covering said mould-formed body (7), **characterised in that** it comprises a plurality of hooks (2) according to any one of the preceding claims.

8. An anchoring system (1) according to claim 7, **characterised in that** it comprises a tubular element (5) disposed in said seat (23) between the edges (22, 22') of said base plates of the hooks (2).

9. An anchoring system (1) according to claim 7 or 8, **characterised in that** said tubular element (5) is a metal rod adapted to couple with magnetic means carried in the forming mould.

10. An anchoring system (1) according to any one of claims 7 to 9, **characterised in that** it comprises a supporting strip (6) on which said base plates (20, 20') of each of said hooks (2) are fixed.

11. An anchoring system (1) according to any one of claims 7 to 10, **characterised in that** it comprises metal elements, such as microspheres, rivets or clips, disposed in said supporting strip (6) and/or in said hooks (2), adapted to couple with magnetic means carried by the forming mould.

## Patentansprüche

1. Haken (2), insbesondre zum Anbringen eines Bahnmaterials an einem in einer Form geformten Körper, wobei der Haken (2) Folgendes umfasst:
zwei Grundplatten (20, 20'),
eine erste Ausstülpung (3) und eine zweite Ausstülpung (3'), die von den Grundplatten (20, 20') derart abstehend hervorragen, dass die Endspitzen (32, 32') der Ausstülpungen in einem bestimmten Abstand voneinander angeordnet sind, um eine Eingangsöffnung (40) zu erzeugen, die zu einem Verankerungssitz (4) führt, der dafür eingerichtet ist, ein Befestigungselement (9, 109, 209) zu verankern, und
einen Sattel (21), der derart mit der Basis der Ausstülpungen (3, 3') verbunden ist, dass zwischen den Kanten (22, 22') der Grundplatten ein Sitz (23) gebildet ist, wobei der Sitz (23) von einem röhrenförmigen Element (5) derart ergriffen werden kann, dass das Zusammenziehen der Ausstülpungen (3, 3') bewirkt wird, um die Eingangsöffnung (40) zwischen den Spitzen (32, 32') der Ausstülpungen zu schließen.

2. Haken (2) nach Anspruch 1, **dadurch gekennzeichnet, dass** die gegenüberliegenden Kanten (22, 22') der Grundplatten (20, 20') und die untere Oberfläche des Verbindungssattels (21) ein im Wesentlichen gewölbtes Profil aufweisen, mit einem Krümmungsradius, der gleich dem des röhrenförmigen Elements (5) ist, das dafür bestimmt ist, den Sitz (23) zu ergreifen.

3. Haken (2) nach Anspruch 1 oder 2, **dadurch gekennzeichnet, dass** die Grundplatten (20, 20') in zwei Ebenen angeordnet sind, die in einem anderen Winkel (θ) als Null zueinander geneigt sind, vorzugsweise im Bereich von 5° bis 25°.

4. Haken (2) nach einem der vorhergehenden Ansprüche, **dadurch gekennzeichnet, dass** jede Ausstülpung (3, 3') aus einem im Wesentlichen J-förmigen Haken besteht, der einen geraden Teil (30, 30') und einen gekrümmten, zu der Spitze (32, 32') auslaufenden Teil (31, 31') aufweist, wobei der gekrümmte Teil (31, 31') eine inneren Schlaufe (34, 34') erzeugt, die als Haltesitz für das Befestigungselement (109, 209) dient, und eine äußere Nockenfläche (35, 35'), die als Führung für das Befestigungselement (9, 109, 209) hin zur Öffnung (40) dient.

5. Haken (2) nach Anspruch 4, **dadurch gekennzeichnet, dass** die geraden Abschnitte (30, 30') der zwei Ausstülpungen (3, 3') derart zueinander geneigt sind, dass ein anderer Winkel (α) als Null entsteht, vorzugsweise im Bereich von 30° bis 60°, so dass der zwischen den zwei Ausstülpungen definierte Verankerungssitz (4) im Wesentlichen herzförmig ist.

6. Haken (2) nach Anspruch 4 oder 5, **dadurch gekennzeichnet, dass** die Spitzen (32, 32') der Ausstülpungen derart auf verschiedenen Niveaus zueinander liegen, dass das Befestigungselement (109, 209) zur Schlaufe (34) der ersten Ausstülpung (3) oder zur Schlaufe (34') der zweiten Ausstülpung (3') geführt wird.

7. Verankerungssystem (1), das dafür bestimmt ist, in einen in einer Form geformten Körper (7) eingebracht zu werden, um ein Befestigungselement (9, 109, 209) zu verankern, das mit einem Bahnmaterial (8) verbunden ist, um den in einer Form geformten Körper (7) abzudecken, **dadurch gekennzeichnet, dass** es mehrere Haken (2) nach einem der vorhergehenden Ansprüche umfasst.

8. Verankerungssystem (1) nach Anspruch 7, **dadurch gekennzeichnet, dass** es ein röhrenförmiges Element (5) umfasst, das in dem Sitz (23) zwischen den Kanten (22, 22') der Grundplatten der Haken (2) angeordnet ist.

9. Verankerungssystem (1) nach Anspruch 7 oder 8, **dadurch gekennzeichnet, dass** das röhrenförmige Element (5) eine Metallstange ist, die dafür eingerichtet ist, mit magnetischen Mitteln, die im formgebenden Formwerkzeug getragen werden, gekoppelt zu werden.

10. Verankerungssystem (1) nach einem der Ansprüche 7 bis 9, **dadurch gekennzeichnet, dass** es einen Stützstreifen (6) umfasst, auf dem die Grundplatten (20, 20') von jedem der Haken (2) befestigt sind.

11. Verankerungssystem(1) nach einem der Ansprüche 7 bis 10, **dadurch gekennzeichnet, dass** es Metallelemente umfasst, wie beispielsweise Mikrokügelchen, Niete oder Klammern, die in dem Stützstreifen (6) und/oder in den Haken (2) angeordnet und dafür eingerichtet sind, mit magnetischen Mitteln, die vom formgebenden Formwerkzeug getragen werden, gekoppelt zu werden.

## Revendications

1. Crochet (2), en particulier pour fixer un matériau en feuille à un corps moulé, le crochet (2) comprenant :
- deux plaques de base (20, 20'),
- une première protubérance (3) et une seconde protubérance (3') saillant en projection depuis lesdites plaques de base (20, 20') de manière à ce que les pointes terminales (32, 32') desdites protubérances soient situées à une certaine distance l'une de l'autre pour créer un orifice d'entrée (40) qui mène à un siège d'ancrage (4) apte à ancrer un élément de fixation (9 ; 109 ; 209) et
- un pont (21) connecté à la base desdites protubérances (3, 3') de manière à former un siège (23) entre les bords (22, 22') desdites plaques de base ; ledit siège (23) pouvant être engagé par un élément tubulaire (5) dans le but d'amener lesdites protubérances (3, 3') à se tirer ensemble pour fermer ledit orifice d'entrée (40) entre les pointes (32, 32') desdites protubérances.

2. Crochet (2) selon la revendication 1, **caractérisé en ce que** les bords opposés (22, 22') desdites plaques de base (20, 20') et la surface inférieure dudit pont connecteur (21) ont un profil sensiblement arqué ayant un rayon de courbure égal à celui de l'élément tubulaire (5) destiné à s'engager dans le siège (23).

3. Crochet (2) selon la revendication 1 ou 2, **caractérisé en ce que** lesdites plaques de base (20, 20') sont disposées sur deux plans inclinés l'un par rapport à l'autre suivant un angle (θ) différent de zéro, de préférence de l'ordre de 5° à 25°.

4. Crochet (2) selon l'une quelconque des revendications précédentes, **caractérisé en ce que** chaque protubérance (3, 3') consiste en un crochet sensiblement en forme de J qui a une partie droite (30, 30') et une partie courbe (31, 31') se terminant dans ladite pointe (32, 32'), ladite partie courbe (31, 31') créant une boucle intérieure (34, 34') faisant office de siège de retenue pour l'élément de fixation (109 ; 209) et une surface de came extérieure (35, 35') faisant office de guide vers ledit orifice (40) pour l'élément de fixation (9 ; 109 ; 209).

5. Crochet (2) selon la revendication 4, **caractérisé en ce que** lesdites sections droites (30, 30') des deux protubérances (3, 3') sont disposées inclinées l'une par rapport à l'autre de manière à créer un angle (α) différent de zéro, de préférence dans la plage de 30° à 60°, de manière à ce que ledit siège d'ancrage (4) défini entre les deux protubérances soit sensiblement en forme de coeur.

6. Crochet (2) selon la revendication 4 ou 5, **caractérisé en ce que** lesdites pointes (32, 32') des protubérances sont à des niveaux différents les unes des autres de manière à diriger ledit élément de fixation (109 ; 209) vers la boucle (34) de la première protubérance (3) ou vers la boucle (34') de la seconde protubérance (3').

7. Système d'ancrage (1) destiné à être incorporé dans un corps moulé (7) pour ancrer un élément de fixation (9 ; 109 ; 209) connecté à un matériau en feuille (8) pour couvrir ledit corps moulé (7), **caractérisé en ce qu'**il comprend une pluralité de crochets (2) selon l'une quelconque des revendications précédentes.

8. Système d'ancrage (1) selon la revendication 7, **caractérisé en ce qu'**il comprend un élément tubulaire (5) disposé dans ledit siège (23) entre les bords (22, 22') desdites plaques de base des crochets (2).

9. Système d'ancrage (1) selon la revendication 7 ou 8, **caractérisé en ce que** ledit élément tubulaire (5) est une barre métallique apte à se coupler à un moyen magnétique supporté dans le moule.

10. Système d'ancrage (1) selon l'une quelconque des revendications 7 à 9, **caractérisé en ce qu'**il comprend une bande support (6) sur laquelle lesdites plaques de base (20, 20') de chacun desdits crochets (2) sont fixées.

11. Système d'ancrage (1) selon l'une quelconque des revendications 7 à 10, **caractérisé en ce qu'**il comprend des éléments métalliques comme des microsphères, rivets ou clips disposés dans ladite bande support (6) et/ou dans lesdits crochets (2) et aptes à se coupler avec le moyen magnétique supporté par le moule.
